**Europäisches Patentamt**

**European Patent Office**

**Office européen des brevets**

(19)

(11) Veröffentlichungsnummer: **0 223 116**
**B1**

# (12) EUROPÄISCHE PATENTSCHRIFT

(45) Veröffentlichungstag der Patentschrift:
**25.01.89**

(21) Anmeldenummer: **86114919.3**

(22) Anmeldetag: **27.10.86**

(51) Int. Cl.⁴: **C08F 283/08**
// (C08F283/08, 222:02)

(54) **Modifizierte Polyphenylenetherharze mit Carboxylgruppen.**

(30) Priorität: **13.11.85 DE 3540118**

(43) Veröffentlichungstag der Anmeldung:
**27.05.87 Patentblatt 87/22**

(45) Bekanntmachung des Hinweises auf die Patenterteilung:
**25.01.89 Patentblatt 89/4**

(84) Benannte Vertragsstaaten:
**BE DE FR GB NL**

(56) Entgegenhaltungen:
**FR-A- 1 435 862**

(73) Patentinhaber: **BASF Aktiengesellschaft,
Carl-Bosch-Strasse 38, D-6700 Ludwigshafen(DE)**

(72) Erfinder: **Taubitz, Christof, Dr., 15 In der Dreispitz,
D-6706 Wachenheim(DE)**
Erfinder: **Seiler, Erhard, Dr., 1 Erpolzheimer Strasse,
D-6700 Ludwigshafen(DE)**
Erfinder: **Schlemmer, Lothar, Duisbergstrasse 1a,
D-6701 Maxdorf(DE)**

## Beschreibung

Die Erfindung betrifft ein Verfahren zur Herstellung von modifizierten Polyphenylenetherharzen durch Aufpfropfen einer olefinisch ungesättigten Verbindung auf Polyphenylenether, die mit Polymerisaten aus vinylaromatischen Verbindungen gemischt sind sowie die modifizierten Polyphenylenetherharze I.

Bei derartigen Polymeren handelt es sich um hochmolekulare Stoffe, bei denen auf bereits vorgebildeten Molekülketten, die durch Polykondensation gewonnen wurden, nachträglich Seitenketten aus olefinisch ungesättigten Verbindungen aufgepfropft werden.

Es ist bekannt, Maleinsäureanhydrid auf Polymerisate wie Polyethylen, Polypropylen, Polystyrol, Butadienpolymerisate, Ethylen-Propylencopolymerisate etc. zu pfropfpolymerisieren (vgl. B.C. Trivedi und B.M. Culbertson in der Publikation "Maleinic Anhydride", Chapter 11, Seiten 459 bis 478, Plenum Press, New York [1982]). Es ist auch bereits die Herstellung von Polyphenylenether-Maleinsäureanhydrid-Pfropfpolymerisaten in der Literatur beschrieben (vgl. US-Patente 4 287 321, 4 338 410 und 4 097 556 sowie EP-A 17 939). Nachteilig bei den bekannten Pfropfpolymerisationsverfahren unter Verwendung von Maleinsäureanhydrid ist aber der Umstand, daß Maleinsäureanhydrid toxisch ist und zur Vermeidung von Gesundheitsschäden und Umweltbelastungen aufwendige Dosierungen eingesetzt werden müssen. Diese Nachteile sind insbesondere bei der Pfropfung in der Schmelzzone eines Extruders gravierend, wenn die Einsatzstoffe über Dosiervorrichtungen dem Extruder zugeführt werden.

Aufgabe der vorliegenden Erfindung war es, die oben beschriebenen Nachteile zu vermeiden und ein Verfahren aufzufinden, bei dem Carboxylgruppen enthaltende Polyphenylenetherharze mit erhöhter Pfropfausbeute entstehen.

Diese Aufgaben werden durch Verfahren gemäß Patentansprüchen 1 bis 4 und durch Polyphenylenetherharze gemäß Patentanspruch 5 gelöst.

Die in den modifizierten Polyphenylenetherharzen enthaltenen Polyphenylenether werden nach bekannten Verfahren aus in ortho-Position durch Alkylgruppen disubstituierten Phenolen durch oxidative Kupplung hergestellt (vgl. US-Patente 3 661 848, 3 219 625, 3 378 505, 3 306 874, 3 306 875 und 3 639 656). Die gegebenenfalls alkylsubstituierten Polyphenylenether sind bevorzugt mit vinylaromatischen Polymerisaten verträglich.

Polymere gelten als miteinander verträglich, wenn sie weitgehend oder ganz ineinander löslich sind (vgl. A. Noshay, "Block Copolymers", Academic Press [1977], Seiten 8 bis 10; sowie O. Olabisi, "Polymer-Polymer Miscibility", Academic Press [1979], Seiten 117 bis 189.

Verträgliche Polyphenylenether sind beispielsweise Poly(2,6-diethyl-1,4-phenylen)-ether, Poly(2-methyl-6-ethyl-1,4-phenylen)-ether, Poly(2-methyl-6-propyl-1,4-phenylen)-ether, Poly(2,6-dipropyl-1,4-phenylen)ether, Poly(2-ethyl-6-propyl-1,4-phenylen)-ether oder Copolymere, wie solche, die 2,3,6-Trimethylphenol enthalten, außerdem Polymermischungen. Besonders bevorzugt ist jedoch Poly(2,6-dimethyl-1,4-phenylen)-ether.

Die Polyphenylenether sind im allgemeinen hochmolekular. Das Molekulargewicht aus dem Gewichtsmittel ($M_W$) beträgt 10.000 bis 80.000, im besonderen 15.000 bis 60.000.

Die Polyphenylenether sind in den modifizierten Polyphenylenetherharzen in Mengen von 95 bis 4,95 Gew.-Teilen, bevorzugt in Mengen über 50 Gew.-Teilen enthalten.

Bei den olefinisch ungesättigten Monomeren handelt es sich um Fumarsäure. Durch den Feststoffcharakter bei hohem Schmelzpunkt und die fehlende Toxizität ist die Substanz besonders vorteilhaft dosierbar. Die Fumarsäure wird im allgemeinen in reiner Form angewendet.

Sie wird bevorzugt zwischen 0,05 und 10 Gew.-Teilen, insbesondere zwischen 0,1 und 5 Gew.-Teilen pfropfpolymerisiert.

Neben der Fumarsäure können gegebenenfalls weitere, auf den Polyphenylenether pfropfpolymerisierbare Monomere mit olefinischen Doppelbindungen eingesetzt werden.

Die Fumarsäure wird gegebenenfalls in Gegenwart eines Radikalstarters, der bevorzugt ein organisches Peroxid oder eine Azoverbindung ist, pfropfpolymerisiert. Solche sind dem Fachmann bekannt.

Beispielhaft seien genannt: 1,1-Di-tert-butyl-peroxy-3,3,5-trimethylcyclohexan, Tert-butyl-peroxy-isopropylcarbonate, Tert-butyl-peroxy-3,3,5-trimethylhexoate, Tert-butyl-peracetat, Tert-butylperbenzoat, 4,4-Di-tert-butyl-peroxy-valeriansäure-n-butylester, 2,2-Di-tert-butyl-peroxy-butan, Di-cumyl-peroxid, Tert-butyl-cumyl-peroxid, 1,3-Bis(tert-butyl-peroxyisopropyl)benzol und Di-tert-butylperoxid.

Bevorzugt sind organische Peroxide mit einer Halbwertszeit des Zerfalls [vgl. Modern Plastics 36, [1959], [6], Seiten 142 bis 148] bei 200°C von 1 bis 30 Sekunden. Die Wahl des Radikalstarters richtet sich nach der gewünschten Reaktionstemperatur.

Bevorzugt ist eine Mischung aus 30 bis 90 Gew.-% eines anorganischen Trägers und 10 bis 70 Gew.-% eines organischen Peroxids, wobei der Träger bevorzugt feinverteilter Ton oder Kreide und das organische Peroxid Dicumylperoxid ist.

Der Starter kann bei einer Reaktionstemperatur von über 200°C bei ausreichender Reaktionsdauer fehlen, gegebenenfalls ist er in Mengen unter 10 Gew.-%, bevorzugt unter 5 Gew.-% anwesend. Nach bevorzugter Verfahrensweise wird oberhalb 200°C in der Polymerschmelze ohne Zusatz eines Radikalstarters pfropfpolymerisiert.

Die Mischungen enthalten noch mit dem Polyphenylenether verträgliche vinylaromatische Polymerisate.

Mit Polyphenylenether verträgliche vinylaromatische Polymerisate sind beispielsweise von O. Olabisi in "Polymer-Polymer Miscibility", Academic Press (1979), Seiten 224 bis 230 und 245 beschrieben. Besonders geeignet sind vinylaromatische Polymerisate, die bestehen aus: Styrol, Chlorstyrol, α-Methylstyrol, p-Methylstyrol, im untergeordneten Maße aus (Methyl)acrylnitrilen, (vorzugsweise unter 8 Gew.-%). Bevorzugt wird Polystyrol eingesetzt.

Das Molekulargewicht der vinylaromatischen Polymeren aus dem Gewichtsmittel ($M_w$) beträgt 1500 bis 2 000 000, besonders bevorzugt 70.000 bis 1 000 000.

Die Polymerisate können durch die üblichen Polymerisationsverfahren, wie Masse-, Suspensions-, Emulsions- oder Lösungspolymerisation hergestellt werden.

Die vinylaromatischen Polymerisate sind in Mengen von 95 bis 4,95 Gew.-Teilen, besonders bevorzugt in Mengen von über 50 Gew.-Teilen im Polyphenyletherharz enthalten.

Die Komponenten werden bevorzugt in der Schmelze der Polymeren bei Temperaturen von 170 bis 350°C, vorzugsweise zwischen 240 und 300°C innig vermischt. Vorzugsweise verwendet man dafür einen Zweischneckenextruder. Die Verweilzeit beträgt im allgemeinen 0,5 bis 10 Minuten, bevorzugt 1 bis 5 Minuten.

Die Komponenten werden vorzugsweise gemeinsam dosiert und in einem Aufschmelzteil aufgeschmolzen. Die Extruderschnecke im Aufschmelzteil enthält bevorzugt Knetelemente. An die Aufschmelzzone schließt sich die Reaktionszone an, die bevorzugt Knetelemente und zusätzlich Knetelemente mit rückwärts förderndem Gewinde enthält. Vor dem Produktaustrag befindet sich bevorzugt eine Entgasungszone zur Entfernung der flüchtigen Bestandteile. Die ausgetragene Schmelze wird im allgemeinen granuliert.

Die Granulate sind vielfältig verwendbar. Die erfindungsgemäßen modifizierten Harze können in der üblichen Weise modifiziert werden. Sie können daher z.B. Verstärkungs- und Füllstoffe, insbesondere Glasfasern, Flammschutzmittel, Stabilisatoren, Gleit- und Flammschutzmittel sowie Farbstoffe und Pigmente enthalten. Als Verstärkungsmittel können z.B. Glasfasern, Glaskugeln, Kaolin, Quarz, Glimmer, Wollastonit, Talkum, Asbest, Titandioxid, Aluminiumoxid, Micovit, Kreide oder calciniertes Aluminiumsilikat eingesetzt werden.

Die erfindungsgemäßen Harze können als Haftmittel eingesetzt werden. Sie eignen sich auch als Werkstoffe, Folien, dünne Haftschichten, Schmelzkleber und Beschichtungen.

Die Beispiele 1 bis 4 zeigen die erfindungsgemäße Herstellung der modifizierten Polyphenyletherharze.

Vergleichsbeispiel 1 zeigt eine Mischung ohne Polystyrol, bei der die erhaltenen Produkte stark vernetzt und damit unbrauchbar sind, Vergleichsbeispiel 2 beinhaltet eine Mischung, bei der Maleinsäureanhydrid statt Fumarsäure eingesetzt wird. Neben der nachteiligen Toxizität des Maleinsäureanhydrids gegenüber der nichttoxischen Fumarsäure wird weit weniger Maleinsäureanhydrid in das modifizierte Harz eingebaut.

Vergleichsbeispiel 3 zeigt eine Mischung ohne Polyphenylenether. Die Mischung ist zwar nicht vernetzt, sie enthält jedoch nur sehr wenig Fumarsäure eingebaut.

Beispiel 1

94 Gew.-Teile Poly-(2,6-dimethyl-1,4-phenylen)-ether (= PPE) mit einer relativen Viskosität von 0,63, gemessen in 1 gew.-%iger $CHCl_3$-Lösung bei 25°C, 13,5 Gew.-Teile Polystyrol (PS 144 C, Fa. BASF, MFI 200/5,0 = 24 g/10 Min) und 2,5 Gew.-Teile Fumarsäure werden in einem Zweischneckenextruder (ZSK 53) der Firma Werner u. Pfleiderer dosiert und in einem ersten Teil unter Verwendung von Knetelementen bei 255°C aufgeschmolzen, anschließend in einem zweiten Teil unter Kneten und Verwendung von abgestauten Knetelementen bei 265°C umgesetzt und anschließend in einer Entgasungszone bei 255°C durch Anlegen von Vakuum entgast. Die mittlere Verweilzeit im Extruder beträgt 2,5 Minuten. Die austretende Schmelze wird durch ein Wasserbad geleitet, granuliert und getrocknet. Das Granulat ist zu 4 Gew.-Teilen in Toluol unlöslich und hat einen Fumarsäuregehalt von 1,6 Gew.-%.

Vergleichsbeispiel 1

97,5 Gew.-Teile PPE aus Beispiel 1 und 2,5 Gew.-Teile Fumarsäure werden wie im Beispiel 1 extrudiert.

Das erhaltene Granulat ist zu 65 Gew.-% in Toluol unlöslich und damit nachteiligerweise weitgehend vernetzt.

Vergleichsbeispiel 2

84 Gew.-Teile PPE gemäß Beispiel 1 und 13,5 Gew.-Teile Polystyrol werden mit 2,5 Gew.-Teilen Maleinsäureanhydrid gemäß Beispiel 1 umgesetzt. Wegen der Toxizität des Maleinsäureanhydrids muß der Verfahrensteil des Extruders einschließlich der Dosierung nachteiligerweise besonders aufwendig abgesaugt werden, um Umweltbelastungen und Gesundheitsgefährdungen zu vermeiden. Das erhaltene Granulat ist zu 6 Gew.-% in Toluol unlöslich und hat einen Maleinsäureanhydridgehalt von 0,7 Gew.-%.

Beispiel 2

80 Gew.-Teile PPE gemäß Beispiel 1 und 18,8 Gew.-Teile Polystyrol (PS 143 E, Fa. BASF, MFI 200/5,0 = 9 g/10 Min.) und 1,2 Gew.-Teile Fumarsäure werden gemäß Beispiel 1 bei 270°C aufgeschmolzen, bei 275°C umgesetzt und bei 270°C entgast. Die mittlere Verweilzeit beträgt 3 Minuten. Das Granulat ist zu 6 Gew.-% in Toluol unlöslich und hat einen Fumarsäuregehalt von 0,8 Gew.-%.

Beispiel 3

85 Gew.-Teile PPE gemäß Beispiel 1 und 14 Gew.-Teile Polystyrol (PS 144 C, Fa. BASF, MFI 200/50 = 24 g/10 Min.) und 1,0 Gew.-Teile Fumarsäure werden gemäß Beispiel 1 bei 280°C aufgeschmolzen, bei 265°C umgesetzt und bei 265°C entgast. Die mittlere Verweilzeit beträgt 3 Minuten. Das Granulat ist zu 4 Gew.-% in Toluol unlöslich und hat einen Fumarsäuregehalt von 0,7 Gew.-%.

Beispiel 4

30 Gew.-Teile PPE gemäß Beispiel 1 und 68 Gew.-Teile Polystyrol (PS 143 E, Fa. BASF, MFI 200/5,0 = 9 g/10 Min.) und 2,0 Gew.-Teile Fumarsäure werden gemäß Beispiel 1 bei 230°C aufgeschmolzen, bei 260°C umgesetzt und bei 240°C entgast. Die mittlere Verweilzeit beträgt 3 Minuten. Das Granulat ist zu 3 Gew.-% in Toluol unlöslich, Fumarsäuregehalt von 1,0 Gew.-%.

Vergleichsbeispiel 3

98 Gew.-Teile Polystyrol (gemäß Beispiel 4) und 2 Gew.-Teile Fumarsäure werden gemäß Beispiel 4 umgesetzt. Das Granulat ist zu 3 Gew.-% in Toluol unlöslich, der Fumarsäuregehalt beträgt 0,1 Gew.-%.

**Patentansprüche**

1. Verfahren zur Herstellung von modifizierten Polyphenylenetherharzen durch Aufpfropfen einer olefinisch ungesättigte Verbindung auf Polyphenylenether, die mit vinylaromatischen Polymerisaten gemischt sind, dadurch gekennzeichnet, daß als olefinisch ungesättigte Verbindung Fumarsäure, gegebenenfalls in Gegenwart eines Radikalstarters, pfropfpolymerisiert wird.

2. Verfahren nach Anspruch 1, dadurch gekennzeichnet, daß bei Temperaturen zwischen 170 und 350°C pfropfpolymerisiert wird.

3. Verfahren nach Anspruch 1, dadurch gekennzeichnet, daß bei Temperaturen oberhalb 200°C in der Polymerschmelze ohne Zusatz eines Radikalstarters pfropfpolymerisiert wird.

4. Verfahren nach Anspruch 1, dadurch gekennzeichnet, daß die Pfropfpolymerisation in einer mit Knetelementen versehenen Reaktionszone einer Extruderschnecke erfolgt.

5. Modifizierte Polyphenylenetherharze nach Anspruch 1 aus 4,95 bis 95 Gew.-Teilen Polyphenylenether, 95 bis 4,95 Gew.-Teilen vinylaromatischem Polymerisat und 0,05 bis 10 Gew.-Teilen pfropfpolymerisierter Fumarsäure.

**Claims**

1. A process for the preparation of a modified polyphenylene ether resin by grafting an olefinically unsaturated compound onto a polyphenylene ether which is mixed with a vinylaromatic polymer, wherein fumaric acid, as the olefinically unsaturated compound, is subjected to graft polymerization in the presence or absence of a free radical initiator.

2. A process as claimed in claim 1, wherein graft polymerization is carried out at from 170 to 350°C.

3. A process as claimed in claim 1, wherein graft polymerization is carried out at a polymer melt temperature of above 200°C and without the addition of a free radical initiator.

4. A process as claimed in claim 1, wherein the graft polymerization is carried out in a reaction zone of an extruder, which zone is provided with kneading elements.

5. A modified polyphenylene ether resin as claimed in claim 1, which consists of from 4.95 to 95 parts by weight of polyphenylene ether, from 95 to 4.95 parts by weight of a vinylaromatic polymer and from 0.05 to 10 parts by weight of graft-polymerized fumaric acid.

**Revendications**

1. Procédé de préparation de résines de poly(éthers de phénylène) modifiées par greffage d'un composé à insaturation oléfinique sur des poly(éthers de phénylène) en mélange avec des polymères vinyl-aromatiques, caractérisé en ce que le composé à insaturation oléfinique, qui est polymérisé par greffage, est l'acide fumarique, éventuellement en présence d'un amorceur à radicaux libres.

2. Procédé suivant la revendication 1, caractérisé en ce que la polymérisation par greffage est réalisée à des températures comprises entre 170 et 350°C.

3. Procédé suivant la revendication 1, caractérisé en ce que la polymérisation par greffage est réalisée à des températures supérieures à 200°C dans le mélange de polymérisation fondu, sans addition d'un amorceur à radicaux libres.

4. Procédé suivant la revendication 1, caractérisé en ce que la polymérisation par greffage est réalisée dans une zone de réaction d'une vis de boudineuse munie d'organes pétrisseurs.

5. Résines de poly(éthers de phénylène) modifiées suivant la revendication 1, constituées de 4,95 à 95 parties en poids de poly(éther de phénylène), de 95 à 4,95 parties en poids d'un polymère vinyl-aromatique et de 0,05 à 10 parties en poids d'acide fumarique, polymérisé par greffage.